# FASCICULE DE BREVET EUROPEEN

(11) **EP 1 683 073 B1**
(45) Date de publication et mention de la délivrance du brevet: **21.02.2007**
(21) Numéro de dépôt: 04805437.3
(22) Date de dépôt: 10.11.2004
(51) Int. Cl.: G06K 9/00, G06K 9/20

(54) **DISPOSITIF OPTIQUE D'IMAGERIE PROPRE A LA FORMATION D'UNE IMAGE D'EMPREINTES DIGITALES**
ZUR ERZEUGUNG EINES BILDES VON FINGERABDRÜCKEN GEEIGNETE OPTISCHE ABBILDUNGSEINRICHTUNG
OPTICAL IMAGING DEVICE SUITED FOR FORMING AN IMAGE OF FINGERPRINTS

(30) Priorité: 14.11.2003 FR 0313379
(43) Date de publication de la demande: 26.07.2006
(73) Titulaire: Sagem Défense Sécurité, 75015 Paris (FR)
(72) Inventeur: CORDIER, Chantal, F-94270 Le Kremlin Bicêtre (FR); BOUTONNE, Miguel, F-91540 Fontenay le Vicomte (FR); RIGUET, François, F-86200 Loudun (FR)
(74) Mandataire: Gorrée, Jean-Michel
(86) Numéro de dépôt international: PCT/FR2004/002896
(87) Numéro de publication internationale: WO 2005/050541

(56) Documents cités:
- EP-A- 0 308 162
- EP-A- 0 348 182
- EP-A- 0 359 554
- WO-A-94/22371
- WO-A-97/43735
- SEIGO IGAKI ET AL: "HOLOGRAPHIC FINGERPRINT SENSOR" FUJITSU-SCIENTIFIC AND TECHNICAL JOURNAL, FUJITSU LIMITED. KAWASAKI, JP, vol. 25, no. 4, 21 décembre 1989 (1989-12-21), pages 287-296, XP000103957 ISSN: 0016-2523
- D. MALTONI ET AL: "Handbook of Fingerprint Recognition" juin 2003 (2003-06), SPRINGER , NEW YORK, USA , XP002320999 2.4 Live-scan Fingerprint Sensing page 59 - page 64
- EGUCHI S ET AL: "HOLOGRAPHIC FINGERPRINT SENSOR" PROCEEDINGS OF THE SPIE, SPIE, BELLINGHAM, VA, US, vol. 1051, 17 janvier 1989 (1989-01-17), pages 129-134, XP000671921 ISSN: 0277-786X

## Description

La présente invention concerne, d'une façon générale, le domaine du relevé d'empreintes digitales et elle concerne, plus particulièrement, des perfectionnements apportés aux dispositifs optiques d'imagerie propres à la formation d'une image optique d'empreintes digitales d'un doigt, comprenant :
- une plaque optique possédant une première et une seconde faces principales opposées, au moins une partie de ladite première face principale située au voisinage d'une première extrémité de la plaque constituant une surface d'appui pour un doigt,
- au moins une source lumineuse située en regard d'une face de ladite plaque, à ladite première extrémité de celle-ci, pour éclairer ledit doigt à travers la plaque, et
- des moyens d'imagerie comprenant un objectif focaliseur qui possède une surface d'entrée et une surface opposée de sortie déterminant un facteur de grandissement et qui est situé en aval de la plaque optique.

Il est explicitement souligné ici que l'invention se rapporte exclusivement à un dispositif optique propre à former une image optique d'empreintes digitales, et qu'elle ne concerne pas les matériels situés en aval dudit dispositif pour scruter/enregistrer l'image obtenue, détecter les points caractéristiques des empreintes digitales et fournir des informations sur la personne concernée.

Les dispositifs de détection d'empreintes digitales peuvent, notamment, servir à authentifier une personne afin que celle-ci soit autorisée à effectuer une opération déterminée : dans ce cas, le dispositif de détection d'empreintes digitales accompagne souvent un autre appareil que la personne authentifiée sera autorisée à utiliser (ordinateur, machine bancaire, ...). La place disponible pour l'implantation du dispositif de détection d'empreintes digitales est alors réduite, et a fortiori le dispositif optique d'imagerie incorporé dans ce dispositif de détection d'empreintes digitales doit être réalisé sous la forme la plus compacte possible, et notamment avec l'épaisseur (ou hauteur) la plus faible possible. Pour fixer les idées, il est requis, au moins pour certaines applications, que le dispositif optique d'imagerie présente une épaisseur (ou hauteur) n'excédant pas environ 5 mm.

On connaît déjà diverses réalisations de dispositifs optiques d'imagerie destinés à la formation d'une image optique d'empreintes digitales, dont par exemple le dispositif du document EP 0 308 162 qui présente les dispositions énoncées au préambule. Toutefois ces dispositifs connus ne permettent pas de donner totalement satisfaction aux exigences de la pratique.

L'invention a pour but de proposer un dispositif optique d'imagerie pour la capture optique d'empreintes digitales qui puisse être réalisé sous la forme la plus compacte possible, et notamment avec une épaisseur minimale qui n'excède pas environ 5 mm, et qui soit structurellement aussi simple que possible avec un nombre minimum d'éléments composants de manière que sa fabrication et son montage soient rendus aussi simples, aussi rapides et aussi économiques que possible.

A ces fins, l'invention propose un dispositif compact optique d'imagerie propre à former une image optique des empreintes digitales d'un doigt, qui se caractérise, étant agencé conformément à l'invention, en ce que :
- lesdites première et seconde faces principales, ladite face en regard de laquelle est située la source lumineuse et la direction d'éclairement de ladite source lumineuse sont mutuellement agencées de manière telle que le faisceau lumineux émis par la source, puis parvenant sur le doigt apposé sur la susdite partie de la première face principale afin d'éclairer ledit doigt, se propage ensuite à l'intérieur de la plaque avec réflexions multiples alternativement sur les première et seconde faces principales de celle-ci pour parvenir jusqu'à la seconde extrémité de la plaque opposée à la susdite première extrémité,
- ladite plaque possède une face de bout, à sa seconde extrémité, qui au moins en partie est inclinée pour que le faisceau lumineux sorte de la plaque par ladite face de bout inclinée sans subir de réfraction importante ou de réflexion,
- l'objectif focaliseur est dimensionné dans les limites de l'épaisseur de la plaque disposé en regard de ladite face inclinée de la seconde extrémité de la plaque avec son axe optique qui s'étend sensiblement dans le plan médian de la plaque entre lesdites faces principales et sensiblement parallèlement à ladite face, et
- un premier miroir disposé en regard de la surface d'entrée dudit objectif focaliseur et ayant une orientation telle qu'il reçoit une partie du faisceau lumineux issu de ladite face de bout de la seconde extrémité de la plaque et la réfléchit en direction de ladite surface d'entrée de l'objectif focaliseur selon l'axe de celui-ci.

Grâce aux dispositions qui précèdent, on est en mesure de constituer un dispositif dont l'élément le plus volumineux est constitué par la plaque optique et dont tous les autres éléments composants qui sont fonctionnellement associés à cette plaque peuvent être conformés et dimensionnés de manière à être disposés dans le prolongement de cette plaque et à rester dimensionnellement dans les limites de l'épaisseur de cette plaque. En particulier cet agencement, et notamment la transmission du faisceau optique d'une extrémité à l'autre de la plaque, peut rester compatible avec une épaisseur de la plaque qui n'excède pas environ 5 mm, conformément aux exigences de la pratique.

Pour rendre l'appareil de capture et d'analyse des empreintes digitales aussi compact que possible, il est souhaitable qu'en particulier le dispositif d'imagerie ne présente pas une étendue excessive, et l'on peut à cet effet prévoir que le point focal image de l'objectif focaliseur ne soit pas situé dans le prolongement de la plaque optique : à cette fin le dispositif optique d'imagerie comporte en outre un second miroir disposé en regard de la surface de sortie dudit objectif focaliseur et orienté de manière telle que le faisceau lumineux issu de l'objectif focaliseur soit réfléchi transversalement (typiquement perpendiculairement) à la plaque. Avantageusement alors, ledit second miroir est orienté de manière que le faisceau lumineux soit réfléchi dans une direction opposée à la surface d'apposition du doigt.

Dans le contexte d'un agencement du dispositif qui soit aussi simple que possible, les première et seconde faces principales de la plaque sont mutuellement parallèles.

Pour constituer un dispositif incluant un nombre minimum de pièces composantes et qui soit donc économique à fabriquer et à installer, on peut prévoir que le premier miroir appartient à une première pièce en saillie rapportée sur la face de bout de la seconde extrémité de la plaque, de manière à s'étendre dans le prolongement de ladite plaque. De la même manière et pour les mêmes raisons, on peut prévoir également que le second miroir appartient à une seconde pièce en saillie rapportée sur la face de bout de la seconde extrémité de la plaque, de manière à s'étendre dans le prolongement de ladite plaque.

Dans un mode de réalisation préféré, pour obtenir une image de qualité bien contrastée, le dispositif optique d'imagerie comporte un diaphragme situé en amont et à proximité de l'objectif focaliseur.

De façon intéressante, l'objectif focaliseur est solidarisé à la face de bout de ladite seconde extrémité de la plaque par l'intermédiaire de moyens de support, et de façon préférée les moyens de support de l'objectif focaliseur sont agencés pour autoriser un déplacement de l'objectif focaliseur le long de son axe optique. Avantageusement alors, les moyens de support de l'objectif focaliseur sont constitués unitairement avec la susdite seconde pièce en saillie incorporant le second miroir.

L'agencement du dispositif optique d'imagerie conforme à l'invention présente l'intérêt de laisser le choix entre diverses solutions possibles pour l'implantation d'une ou plusieurs sources lumineuses.

Selon une première possibilité, à sa première extrémité la plaque comporte une face de bout qui est inclinée à angle aigu par rapport à ladite première face principale et la source lumineuse est située en regard de ladite face de bout inclinée : la source lumineuse reste ainsi disposée dans les limites dimensionnelles d'épaisseur de la plaque, de sorte que le dispositif est dans son ensemble peu épais.

Selon une deuxième possibilité, au niveau de ladite partie de la première face de la plaque formant surface d'apposition d'un doigt, au moins une face de côté de la plaque est inclinée à angle aigu par rapport à ladite première face principale et la source lumineuse est située en regard de ladite face de côté inclinée. Dans ce cas il est avantageux que les deux faces de côté opposées de la plaque soient inclinées et que deux sources lumineuses soient situées respectivement en regard desdites deux faces de côté inclinées, de sorte que le doigt est alors éclairé bilatéralement, ce qui favorise la formation d'une image de meilleure qualité des empreintes digitales. Dans cette solution encore, la ou les sources lumineuses restent disposées dans les limites dimensionnelles d'épaisseurs de la plaque optique.

Quelle que soit la solution retenue pour l'implantation de la ou des sources lumineuses, il est possible d'obtenir un faisceau lumineux d'éclairage plus divergent et donc couvrant mieux le doigt en prévoyant que la ou les faces inclinées de la plaque situées vers la première extrémité de celle-ci sont incurvées dans le sens de l'épaisseur de la plaque, avec la concavité tournée vers l'extérieur.

Dans une variante de réalisation préférée, on peut prévoir que la source lumineuse est non ponctuelle avec une surface significative et est placée devant la face principale inférieure de la plaque, sensiblement en regard de ladite partie d'appui d'un doigt prévue sur la face principale supérieure et dirigée vers celle-ci ; avantageusement alors, la source lumineuse est une matrice de diodes électroluminescentes, avec un dépoli interposé entre celle-ci et la face inférieure de la plaque.

L'invention sera mieux comprise à la lecture de la description détaillée qui suit de certains modes de réalisation détaillés donnés à titre purement illustratif. Dans cette description, on se réfère aux dessins annexés sur lesquels :
- les figures 1 et 2 sont des vues respectivement de dessus et de côté d'un dispositif optique d'imagerie agencé conformément à l'invention ;
- la figure 3 est une vue de dessous du dispositif des figures 1 et 2, avec une partie d'extrémité coupée selon la ligne III-III de la figure 2 ;
- la figure 4 est une vue de bout de l'extrémité de gauche du dispositif de la figure 1 ;
- la figure 5 est une vue en coupe selon la ligne V-V du dispositif de la figure 1 ;
- la figure 6 est une vue de bout de l'extrémité de droite du dispositif de la figure 1 ;
- les figures 7 et 8 sont des vues de côté analogues à celle de la figure 2, illustrant respectivement deux variantes de réalisation du dispositif conforme à l'invention ;
- la figure 9 est une vue de bout analogue à celle de la figure 6, illustrant une variante de réalisation du dispositif conforme à l'invention ; et
- la figure 10 est une vue de côté, partielle, analogue à celle de la figure 2, illustrant une variante de réalisation préférée du dispositif conforme à l'invention.

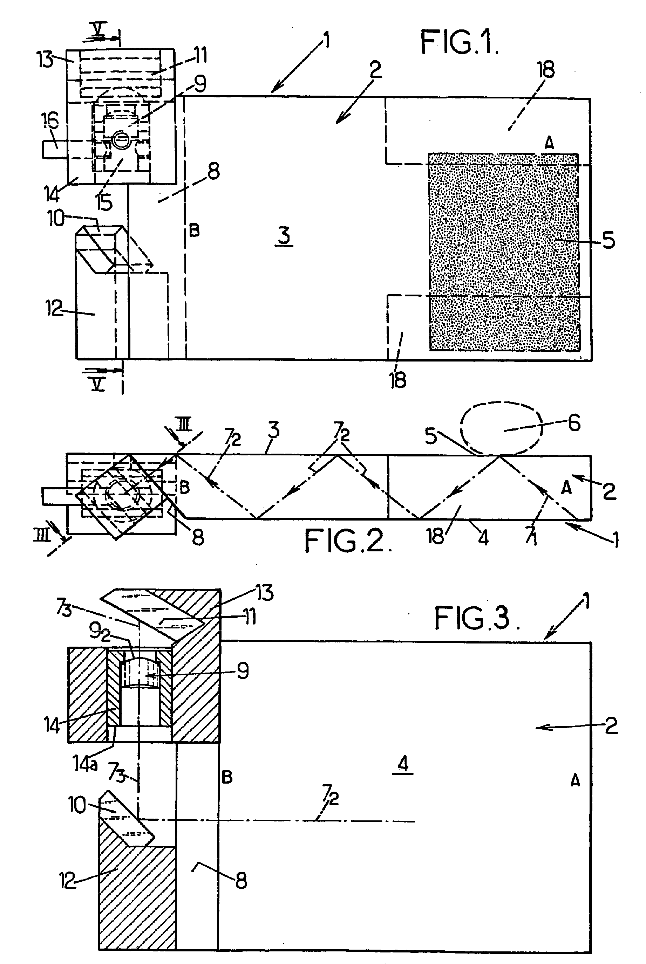

On se référera tout d'abord à l'ensemble des figures 1 à 6 pour décrire un mode de réalisation préféré d'un dispositif optique d'imagerie propre à former une image optique des empreintes digitales d'un doigt.

Le dispositif optique d'imagerie conforme à l'invention, désigné dans son ensemble par la référence 1, comprend principalement :
- une plaque optique 2 possédant une première face principale 3 et une seconde face principale 4 opposée à la précédente, les deux faces 3 et 4 pouvant avantageusement
- pour simplifier la conception du dispositif à la fois sur le plan mécanique et sur le plan optique - être parallèles l'une à l'autre comme illustré sur l'ensemble des figures ; au moins une partie 5 (dessinée en grisé à la figure 1 pour mieux la différencier du reste de la plaque) de la première face principale 3, située au voisinage d'une première extrémité A (à droite sur les figures 1 à 3) de la plaque 2 constitue une surface d'appui pour un doigt 6 ; dans son ensemble la plaque 2 se présente avec une forme généralement parallélépipédique rectangle ;
- au moins une source lumineuse - dont il sera question de façon plus détaillée ultérieurement - située en regard d'une face de la plaque optique 2, à la susdite première extrémité A de celle-ci, pour éclairer le doigt 6 à travers la plaque 2 ;
- les première et seconde faces principales 3, 4 de la plaque 2, la face de la plaque en regard de laquelle est située la source lumineuse et la direction d'éclairement de ladite source lumineuse étant mutuellement agencées de manière que le faisceau lumineux émis par la source parvienne (7₁) sur le doigt 6 apposé sur la susdite partie 5 de la première face principale 3 afin d'éclairer ledit doigt 6, puis se propage (7₂) à l'intérieur de la plaque 2 avec des réflexions multiples alternativement sur les première et seconde faces principales 3, 4 de celle-ci pour parvenir jusqu'à la seconde extrémité B de la plaque 2 opposée à l'extrémité A ;
- la plaque 2 ayant, à sa seconde extrémité B, une face de bout 8 qui est inclinée de manière à être frappée sensiblement perpendiculairement par le faisceau lumineux 7₂ afin que celui-ci sorte de la plaque par ladite face inclinée 8 sans subir de réfraction importante ni de réflexion ; et
- des moyens d'imagerie qui vont être explicités ci-après.

Le fait de canaliser le faisceau lumineux dans la plaque 2, avec réflexions multiples sur les faces principales 3, 4 opposées de celle-ci, permet, pour une longueur donnée du trajet optique, de rapprocher l'une de l'autre les deux extrémités du trajet optique, et donc de réaliser un dispositif plus court et moins encombrant. Le fait que les deux faces principales 3, 4 soient mutuellement parallèles assure des réflexions identiques et symétriques sur les deux faces, ce qui simplifie la conception optique et la fabrication de la plaque ; toutefois, si la nécessité s'en fait sentir, les deux faces 3, 4 peuvent ne pas être parallèles.

Les moyens d'imagerie situés après la seconde extrémité B comprennent principalement un objectif focaliseur 9 (par exemple sous forme d'une lentille convergente épaisse) qui présente une surface d'entrée 9₁ recueillant le faisceau lumineux ayant traversé la face inclinée 8 de la plaque 2 et une surface de sortie 9₂ de laquelle sort le faisceau focalisé ; les surfaces d'entrée 9₁ et de sortie 9₂ de l'objectif focaliseur 9 déterminent un facteur de grandissement entre le doigt et son image.

Pour que le dispositif 1 soit le moins épais possible, il est intéressant, comme on le voit mieux aux figures 3 et 5, que l'objectif focaliseur 9 soit disposé en position couchée et s'inscrive alors dans les limites dimensionnelles définies entre les deux faces principales 3, 4 de la plaque 2. Il convient alors que le faisceau ayant traversé la face de bout inclinée 8 de la plaque 2 soit réfléchi selon l'axe 11 de l'objectif focaliseur 9. A cet effet, on dispose un miroir 10 ayant une double inclinaison, à la fois par rapport à la normale à la face 8 et par rapport à l'axe 11 de l'objectif focaliseur 9 comme cela se voit mieux aux figures 3, 4 et 5. Dans l'agencement typique plus spécifiquement illustré aux figures 1 à 6, l'inclinaison du miroir 10 est d'environ 45° dans les deux cas. Sur la figure 3, on a représenté en 7₂ et en 7₃ le trajet du faisceau dans la plaque 2, puis après réflexion sur le miroir 10 et à travers l'objectif focaliseur 9.

Le faisceau focalisé issu de l'objectif focaliseur 9 doit ensuite parvenir sur un capteur (non montré) propre à détecter l'image des empreintes digitales, ce capteur étant situé au foyer image de l'objectif focaliseur. Pour éviter un encombrement excessif du dispositif 1, le capteur n'est pas situé sur l'axe optique de l'objectif focaliseur 9, mais sous le dispositif 1 (le capteur est par exemple intégré dans une unité de traitement surmontée par le dispositif 1). A cette fin, on prévoit un autre miroir 11 disposé en regard de la surface de sortie 9₂ de l'objectif focaliseur 9 et incliné (par exemple à environ 45°) pour réfléchir le faisceau 7₃ transversalement (et notamment sensiblement perpendiculairement) à la plaque 2.

Grâce à ces dispositions on constitue un dispositif optique d'imagerie qui peut être rendu particulièrement compact, avec le faisceau focalisé dirigé à l'opposé de la surface d'apposition du doigt. En outre, on peut envisager divers aménagements conduisant à une compacité remarquable.

Le premier miroir 10 et/ou le second miroir 11 peuvent être formés sur des pièces respectives 12, 13 qui sont rapportées sur la face de bout inclinée 8 de la plaque 2 à partir de laquelle elles s'étendent en saillie dans le prolongement de la plaque.

Avantageusement, pour limiter l'influence des lumières parasites et obtenir une image de meilleure qualité, on prévoit un diaphragme situé en amont et à proximité de l'objectif focaliseur. En pratique, la face frontale 14a des moyens de support dont question ci-après peut servir de diaphragme.

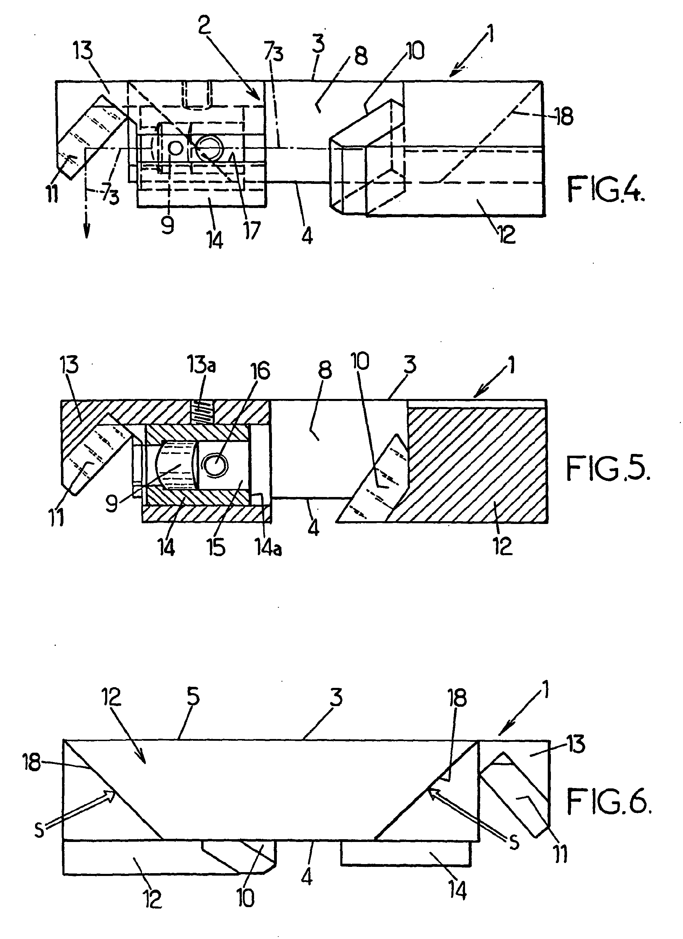

De son côté l'objectif focaliseur 9 est, lui aussi, fixé à la plaque 2, à l'extrémité B de celle-ci, par l'intermédiaire de moyens de support 14. Ces moyens de support 14 peuvent, par exemple, se présenter sous forme d'un manchon solidarisé (notamment collé) à la face de bout inclinée 8 de la plaque 2, manchon dans lequel est introduit l'objectif 9. De préférence, l'objectif 9 peut être déplacé axialement à l'intérieur du manchon, de manière à autoriser un réglage de position du plan focal image par rapport au capteur. On peut à cet effet prévoir, par exemple, que l'objectif 9 soit solidaire d'une platine 15 munie d'un doigt 16 saillant radialement à travers une fente latérale 17 du manchon, comme cela apparaît plus clairement aux figures 4 et 5. Dans cet exemple concret de réalisation, on notera que les moyens de support sont constitués d'un seul tenant avec la pièce en saillie 13 incorporant un second miroir 11, ladite pièce 13 comportant un alésage dans lequel est introduit le manchon précité. Le manchon peut être bloqué en position à l'aide par exemple d'une vis radiale de blocage engagée à travers (13a) la pièce 13.

L'agencement du dispositif optique d'imagerie conforme à l'invention offre l'intérêt d'autoriser diverses implantations possibles de la ou des sources lumineuses, en fonction de la place disponible.

Dans le mode de réalisation préféré illustré aux figures 1 à 6, la plaque 2, vers sa première extrémité A et approximativement au droit de la susdite partie 5 de la première face principale 3 formant surface d'apposition d'un doigt, comporte au moins une face latérale 18 qui est inclinée à angle aigu par rapport à la première face principale 3 de la plaque 2. De préférence, les deux faces latérales 18 opposées sont inclinées de façon à procurer un éclairage symétrique du doigt. Dans l'exemple illustré qui est mieux visible à la figure 6, l'inclinaison des deux faces latérales 18 est d'environ 45°. Deux sources lumineuses S (par exemple sous forme de photodiodes) sont disposées respectivement en regard des faces inclinées 18 et avec leurs axes respectifs approximativement perpendiculaires aux faces 18. Dans cet exemple, les faces 18 sont planes. L'agencement ainsi proposé procure un éclairage bilatéral, et donc plus uniforme et plus efficace, du doigt apposé sur la partie 5.

On peut obtenir des cônes d'éclairage plus ouverts, à partir des mêmes sources lumineuses, en constituant les faces inclinées sous forme incurvée à concavité tournée vers l'extérieur comme illustré en 19 à la figure 9.

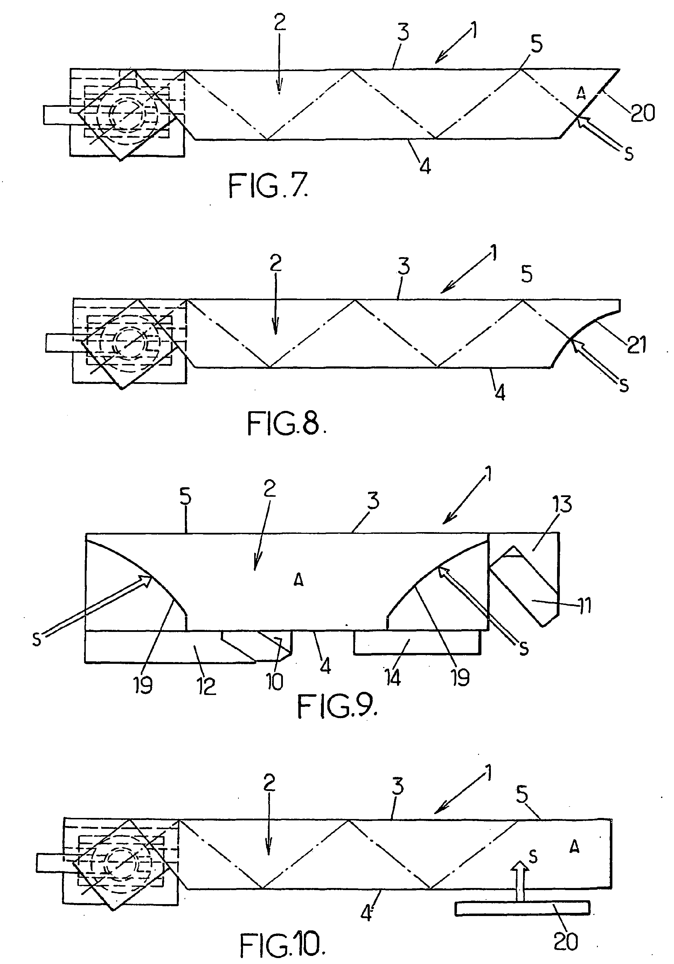

Une autre configuration possible, illustrée à la figure 7, consiste à éclairer le doigt à travers la face de bout 20 située à la première extrémité A de la plaque 2. A cet effet, ladite face de bout 20 est inclinée à angle aigu par rapport à la première face principale 3 de la plaque 2 et la source lumineuse S est disposée en regard de la face 20, avec son axe approximativement perpendiculaire à celle-ci. Dans l'exemple illustré, l'inclinaison de la face 20 est d'environ 45°. Plusieurs sources S peuvent être réparties en regard de la face 20, sur la largeur de la plaque 2.

Un cône d'éclairage plus ouvert peut être obtenu en prévoyant, comme illustré à la figure 8, une face de bout 21 qui est inclinée et incurvée avec sa concavité tournée vers l'extérieur.

Dans une variante de réalisation qui est, actuellement préférée, l'éclairage du doigt est obtenu, comme montré à la figure 10, en disposant la source lumineuse non ponctuelle ayant une surface significative et placée devant la face inférieure 4 de la plaque 2, en regard de ladite partie 5 d'apposition d'un doigt et dirigée vers celle-ci. En pratique, cette source lumineuse peut avantageusement être une matrice 20 de diodes électroluminescentes, avec un dépoli interposé entre celle-ci et la face inférieure 4 de la plaque 2 ou formé sur ladite plaque.

D'après les explications qui précèdent, on comprend que les pièces en saillie 12 et 13 incorporant respectivement les miroirs 10 et 11, ainsi que les moyens 14 de support de l'objectif focaliseur 9 peuvent être réalisées avec des dimensions n'excédant pas les limites supérieure et inférieure définies par les faces principales 3 et 4, respectivement, de la plaque 2. On est ainsi en mesure de constituer un dispositif très compact et surtout présentant une très faible épaisseur qui peut ne pas excéder 5 mm, répondant ainsi aux exigences de la pratique. Ce dispositif ne comprend qu'un très faible nombre de pièces composantes, ce qui rend sa fabrication aisée et peu coûteuse.

## Revendications

1. Dispositif compact optique d'imagerie (1) propre à former une image optique des empreintes digitales d'un doigt (6), comprenant :
- une plaque optique (2) possédant une première et une seconde faces principales (3, 4) opposées, au moins une partie (5) de ladite première face principale (3) située au voisinage d'une première extrémité (A) de la plaque (2) constituant une surface d'appui pour un doigt (6),
- au moins une source lumineuse (S) située en regard d'une face de ladite plaque (2), à ladite première extrémité (A) de celle-ci, pour éclairer ledit doigt (6) à travers la plaque (2), et
- des moyens d'imagerie restant dimensionnellement dans les limites de l'épaisseur de cette plaque et comprenant un objectif focaliseur (9) qui possède une surface d'entrée (9₁) et une surface opposée de sortie (9₂) déterminant un facteur de grandissement et qui est situé en aval de la plaque optique (2),
**caractérisé en ce que**
- lesdites première et seconde faces principales (3, 4), ladite face en regard de laquelle est située la source lumineuse (S) et la direction d'éclairement de ladite source lumineuse (S) sont mutuellement agencées de manière telle que le faisceau lumineux, émis par la source puis parvenant (7₁) sur le doigt (6) apposé sur la susdite partie (5) de la première face principale (3) afin d'éclairer ledit doigt, se propage (7₂) ensuite à l'intérieur de la plaque (2) avec réflexions multiples alternativement sur les première et seconde faces principales (3, 4) de celle-ci pour parvenir jusqu'à la seconde extrémité (B) de la plaque (2) opposée à la susdite première extrémité (A),
- ladite plaque (2) possède une face de bout (8), à sa seconde extrémité (B), qui au moins en partie est inclinée pour que le faisceau lumineux sorte de la plaque par ladite face de bout (8) inclinée sans subir de réfraction importante ou de réflexion,
- l'objectif focaliseur (9) est dimensionné dans les limites de l'épaisseur de la plaque disposé en regard de ladite face (8) inclinée de la seconde extrémité (B) de la plaque (2) avec son axe optique qui s'étend sensiblement dans le plan médian de la plaque entre lesdites faces principales et sensiblement parallèlement à ladite face (8), et
- un premier miroir (10) disposé en regard de la surface d'entrée (9₁) dudit objectif focaliseur (9) et ayant une orientation telle qu'il reçoit une partie du faisceau lumineux issu de ladite face de bout (8) de la seconde extrémité (B) de la plaque (2) et la réfléchit (7₃) en direction de ladite surface d'entrée (9₁) de l'objectif focaliseur (9) selon l'axe de celui-ci.

2. Dispositif optique d'imagerie selon la revendication 1, **caractérisé en ce qu'**il comporte en outre un second miroir (11) disposé en regard de la surface de sortie (9₂) dudit objectif focaliseur (9) et orienté de manière telle que le faisceau lumineux issu de l'objectif focaliseur (9) soit réfléchi transversalement à la plaque (2).

3. Dispositif optique d'imagerie selon la revendication 2, **caractérisé en ce que** ledit second miroir (11) est orienté de manière que le faisceau lumineux soit réfléchi dans une direction opposée à la surface (3) d'apposition du doigt (6).

4. Dispositif optique d'imagerie selon l'une quelconque des revendications 1 à 3, **caractérisé en ce que** les première et seconde faces principales (3, 4) de la plaque (2) sont mutuellement parallèles.

5. Dispositif optique d'imagerie selon l'une quelconque des revendications 1 à 4, **caractérisé en ce que** le premier miroir (10) appartient à une première pièce en saillie (12) rapportée sur la face de bout (8) de la seconde extrémité (B) de la plaque (2), de manière à s'étendre dans le prolongement de ladite plaque.

6. Dispositif optique d'imagerie selon l'une quelconque des revendications 2 à 5, **caractérisé en ce que** le second miroir (11) appartient à une seconde pièce en saillie (13) rapportée sur la face de bout (8) de la seconde extrémité (B) de la plaque (2), de manière à s'étendre dans le prolongement de ladite plaque.

7. Dispositif optique d'imagerie selon l'une quelconque des revendications 1 à 6, **caractérisé en ce qu'**il comprend en outre un diaphragme situé en amont et à proximité de l'objectif focaliseur.

8. Dispositif optique d'imagerie selon l'une quelconque des revendications 1 à 7, **caractérisé en ce que** l'objectif focaliseur (9) est solidarisé à la face de bout (8) de ladite seconde extrémité (B) de la plaque (2) par l'intermédiaire de moyens de support (14).

9. Dispositif optique d'imagerie selon la revendication 8, **caractérisé en ce que** les moyens (14) de support de l'objectif focaliseur (9) sont agencés pour autoriser un déplacement de l'objectif focaliseur (9) le long de son axe optique.

10. Dispositif optique d'imagerie selon la revendication 6 et la revendication 8 ou 9, **caractérisé en ce que** les moyens (14) de support de l'objectif focaliseur (9) sont constitués unitairement avec la susdite seconde pièce en saillie (13) incorporant le second miroir (11).

11. Dispositif optique d'imagerie selon l'une quelconque des revendications 1 à 10, **caractérisé en ce qu'**à sa première extrémité (A) la plaque (2) comporte une face de bout (20) qui est inclinée à angle aigu par rapport à ladite première face principale (3) et **en ce que** la source lumineuse (S) est située en regard de ladite face de bout (20) inclinée.

12. Dispositif optique d'imagerie selon l'une quelconque des revendications 1 à 10, **caractérisé en ce qu'**au niveau de ladite partie (5) de la première face principale (3) de la plaque (2) formant surface d'apposition d'un doigt (6), au moins une face de côté (18) de la plaque (2) est inclinée à angle aigu par rapport à ladite première face principale (3) et **en ce que** la source lumineuse (S) est située en regard de ladite face de côté inclinée (18).

13. Dispositif optique d'imagerie selon la revendication 12, **caractérisé en ce que** les deux faces de côté (18) opposées de la plaque (2) sont inclinées et **en ce que** deux sources lumineuses (S) sont situées respectivement en regard desdites deux faces de côté inclinées.

14. Dispositif optique d'imagerie selon l'une quelconque des revendications 11 à 13, **caractérisé en ce que** la au moins une face de côté (18) inclinée de la plaque (2) située vers la première extrémité (A) de celle-ci est incurvée dans le sens de l'épaisseur de la plaque (2), avec la concavité tournée vers l'extérieur.

15. Dispositif optique d'imagerie selon l'une quelconque des revendications 1 à 10, **caractérisé en ce que** la source lumineuse (S) est non ponctuelle avec une surface significative et est placée devant la face principale inférieure (4) de la plaque (2), sensiblement en regard de ladite partie (5) d'appui d'un doigt prévue sur la face principale supérieure (3) et dirigée vers celle-ci.

16. Dispositif optique d'imagerie selon la revendication 15, **caractérisé en ce que** la source lumineuse (S) est une matrice (20) de diodes électroluminescentes, avec un dépoli interposé entre celle-ci et la face inférieure (4) de la plaque (2).

## Claims

1. A compact optical imaging device (1) suitable for forming optical images of fingerprints of a finger (6), comprising:
- an optical plate (2) having first and second opposite main faces (3, 4), at least a portion (5) of said first main face (3) situated in the vicinity of a first end (A) of the plate (2) constituting a finger-press surface for a finger (6);
- at least one light source (S) situated facing a face of said plate (2) at said first end (A) thereof, in order to illuminate said finger (6) through the plate (2); and
- imaging means dimensionally remaining inside boundaries of the thickness of this plate and including a focusing lens (9) that possesses an inlet surface (9₁) and a outlet surface (9₂) determining a magnification factor, and that is situated downstream from the optical plate (2) ;
**characterized in that**:
- said first and second main faces (3, 4), said face in front of which the light source (S) is situated, and the illumination direction of said light source (S) are mutually arranged in such a manner that the light beam emitted by the source and then reaching (7₁) the finger (6) pressed against said portion (5) of the first main face (3) in order to illuminate said finger, propagates (7₂) thereafter inside the plate (2) with multiple reflections alternately on the first and on the second main faces (3, 4) thereof in order to reach the second end (B) of the plate (2) opposite from said first end (A);
- said plate (2) has an end face (8) at its second end (B) that is inclined at least in part, so that the light beam leaves the plate via said inclined end face (8) without being subjected to significant refraction or reflection;
- the focusing lens (9) is sized inside the boundaries of the thickness of the plate and is disposed facing said inclined face (8) of the second end (B) of the plate (2) with its optical axis extending substantially in the midplane of the plate between said main faces and extending substantially parallel to said inclined face (8); and
- a first mirror (10) is placed facing the inlet surface (9₁) of said focusing lens (9) and is oriented in such a manner as to receive a portion of the light beam coming from said end face (8) of the second end (B) of the plate (2) and reflect it (7₃) towards said inlet surface (9₁) of the focusing lens (9) along the axis thereof.

2. An optical imaging device according to claim 1, **characterized in that** it further includes a second mirror (11) disposed facing the outlet surface (9₂) of said focusing lens (9) and oriented in such a manner that the light beam coming from the focusing lens (9) is reflected transversely relative to the plate (2).

3. An optical imaging device according to claim 2, **characterized in that** said second mirror (11) is oriented in such a manner that the light beam is reflected in a direction going away from the finger-press surface (5).

4. An optical imaging device according to any one of claims 1 to 3, **characterized in that** the first and second main faces (3, 4) of the plate (2) are mutually parallel.

5. An optical imaging device according to any one of claims 1 to 4, **characterized in that** the first mirror (10) belongs to a first projecting part (12) fitted on the end face (8) of the second end (B) of the plate (2), in such a manner as to extend in line with said plate.

6. An optical imaging device according to any one of claims 2 to 5, **characterized in that** the second mirror (11) belongs to a second projecting part (13) fitted on the end face (8) of the second end (B) of the plate (2) in such a manner as to extend in line with said plate.

7. An optical imaging device according to any one of claims 1 to 6, **characterized in that** it further includes a diaphragm situated upstream from and close to the focusing lens.

8. An optical imaging device according to any one of claims 1 to 7, **characterized in that** the focusing lens (9) is secured to the end face (8) of said second end (B) of the plate (2) via support means (14).

9. An optical imaging device according to claim 8, **characterized in that** the support means (14) of the focusing lens (9) are arranged to allow the focusing lens (9) to move along its optical axis.

10. An optical imaging device according to claim 6 and claim 8 or 9, **characterized in that** the support means (14) of the lens (9) are constituted in one piece with said second projecting part (13) incorporating the second mirror (11).

11. An optical imaging device according to any one of claims 1 to 10, **characterized in that** at its first end (A) the plate (2) includes an end face (20) that is inclined at an acute angle relative to said first main face (B), and **in that** the light source (S) is situated facing said inclined end face (20).

12. An optical imaging device according to any one of claims 1 to 10, **characterized in that** at said finger-press portion (5) of the first main face (3) of the plate (2), at least one side face (18) of the plate (2) is inclined at an angle that is acute relative to said first main face (3), and **in that** the light source (S) is situated facing said inclined side face (18).

13. An optical imaging device according to claim 12, **characterized in that** both opposite side faces (18) of the plate (2) are inclined, and **in that** two light sources (S) are situated facing respective ones of said two inclined side faces.

14. An optical imaging device according to any one of claims 11 to 13, **characterized in that** the at least one inclined side face (18) of the plate (2) situated towards the first end (A) thereof is curved in the thickness of the plate (2), with its concave face facing outwards.

15. An optical imaging device according to any one of claims 1 to 10, **characterized in that** the light source (S) is not a point source, presenting a significant surface area and being placed facing the bottom main face (4) of the plate (2), substantially facing said finger-press portion (5) provided on the top main face (3), and directed towards it.

16. An optical imaging device according to claim 15, **characterized in that** the light source (S) is a matrix (20) of light-emitting diodes, with a ground surface interposed between the light source and the bottom face (4) of the plate (2).

## Patentansprüche

1. Kompakte optische Vorrichtung (1) zur Bildherstellung, die geeignet ist, ein optisches Bild der Fingerabdrücke eines Fingers (6) zu bilden, umfassend:
- eine optische Platte (2) mit einer ersten und einer zweiten Hauptseite (3, 4), die einander gegenüberstehen, wobei mindestens ein in Nähe eines ersten Endes (A) der Platte (2) gelegener Teil (5) der ersten Hauptseite (3) eine Auflagefläche für einen Finger (6) bildet,
- mindestens eine Lichtquelle (S), die gegenüber einer Seite der Platte (2) an deren erstem Ende (A) gelegen ist, um den Finger (6) durch die Platte (2) zu beleuchten, und
- Bildherstellungsmittel, die hinsichtlich der Abmessungen in den Grenzen der Dicke dieser Platte bleiben und ein fokussierendes Objektiv (9) umfassen, das eine Eintrittsfläche (9₁) und eine entgegengesetzte Austrittsfläche (9₂) besitzt, die einen Vergrößerungsfaktor bestimmen, und das stromab der optischen Platte (2) gelegen ist,
**dadurch gekennzeichnet, dass**
- die erste und die zweite Hauptseite (3, 4), die Seite, gegenüber welcher die Lichtquelle (S) gelegen ist, und die Beleuchtungsrichtung der Lichtquelle (S) zueinander so angeordnet sind, dass der Lichtstrahl, der von der Quelle ausgesendet wird und dann zu dem auf den Teil (5) der ersten Hauptseite (3) aufgelegten Finger (6) gelangt (7₁), um diesen Finger zu beleuchten, und sich dann im Inneren der Platte (2) unter vielfachen Reflexionen abwechselnd an deren ersten und an deren zweiten Seite (3, 4) fortpflanzt (7₂), um zu dem dem ersten Ende (A) entgegengesetzten zweiten Ende (B) der Platte (2) zu gelangen,
- die Platte (2) an ihrem zweiten Ende (B) eine Endseite (8) aufweist, die mindestens zum Teil geneigt ist, so dass der Lichtstrahl aus der Platte über diese geneigte Endseite (8) austritt, ohne eine starke Brechung oder eine Reflexion zu erleiden,
- das fokussierende Objektiv (9) in den Grenzen der Dicke der Platte dimensioniert ist und gegenüber dieser geneigten Seite (8) des zweiten Endes (B) der Platte (2) angeordnet ist, indem sich seine optische Achse im Wesentlichen in der Mittelebene der Platte zwischen den Hauptseiten und im Wesentlichen parallel zu der Seite (8) erstreckt, und
- ein erster Spiegel (10) gegenüber der Eintrittsfläche (9₁) des fokussierenden Objektivs (9) angeordnet ist und eine solche Ausrichtung aufweist, dass er einen Teil des aus der Endseite (8) des zweiten Endes (B) der Platte (2) austretenden Lichtstrahls aufnimmt und ihn in Richtung der Eintrittsfläche (9₁) des fokussierenden Objektivs (9) in dessen Achse reflektiert (7₃).

2. Optische Vorrichtung zur Bildherstellung nach Anspruch 1, **dadurch gekennzeichnet, dass** sie außerdem einen zweiten Spiegel (11) umfasst, der gegenüber der Austrittsfläche (9₂) des fokussierenden Objektivs (9) angeordnet ist und so ausgerichtet ist, dass der von dem fokussierenden Objektiv (9) kommende Lichtstrahl quer zur Platte (2) reflektiert wird.

3. Optische Vorrichtung zur Bildherstellung nach Anspruch 2, **dadurch gekennzeichnet, dass** der zweite Spiegel (11) so ausgerichtet ist, dass der Lichtstrahl in einer Richtung reflektiert wird, die zu der Fläche (3) zur Auflage des Fingers (6) entgegengesetzt ist.

4. Optische Vorrichtung zur Bildherstellung nach einem der Ansprüche 1 bis 3, **dadurch gekennzeichnet, dass** die erste und die zweite Hauptseite (3, 4) der Platte (2) zueinander parallel sind.

5. Optische Vorrichtung zur Bildherstellung nach einem der Ansprüche 1 bis 4, **dadurch gekennzeichnet, dass** der erste Spiegel (10) zu einem ersten vorstehenden Teil (12) gehört, das auf der Endseite (8) des zweiten Endes (B) der Platte (2) so angebracht ist, dass es sich in der Verlängerung der Platte erstreckt.

6. Optische Vorrichtung zur Bildherstellung nach einem der Ansprüche 2 bis 5, **dadurch gekennzeichnet, dass** der zweite Spiegel (11) zu einem zweiten vorstehenden Teil (13) gehört, das auf der Endseite (8) des zweiten Endes (B) der Platte (2) so angebracht ist, dass es sich in der Verlängerung der Platte erstreckt.

7. Optische Vorrichtung zur Bildherstellung nach einem der Ansprüche 1 bis 6, **dadurch gekennzeichnet, dass** sie außerdem eine stromauf und in Nähe des fokussierenden Objektivs gelegene Blende umfasst.

8. Optische Vorrichtung zur Bildherstellung nach einem der Ansprüche 1 bis 7, **dadurch gekennzeichnet, dass** das fokussierende Objektiv (9) mit der Endseite (8) des zweiten Endes (B) der Platte (2) über Tragmittel (14) fest verbunden ist.

9. Optische Vorrichtung zur Bildherstellung nach Anspruch 8, **dadurch gekennzeichnet, dass** die Tragmittel (14) des fokussierenden Objektivs (9) ausgebildet sind, um eine Bewegung des fokussierenden Objektivs (9) längs seiner optischen Achse zuzulassen.

10. Optische Vorrichtung zur Bildherstellung nach Anspruch 6 und Anspruch 8 oder 9, **dadurch gekennzeichnet, dass** die Tragmittel (14) des fokussierenden Objektivs (9) als Einheit mit dem den zweiten Spiegel (11) einschließenden zweiten vorspringenden Teil (13) ausgeführt sind.

11. Optische Vorrichtung zur Bildherstellung nach einem der Ansprüche 1 bis 10, **dadurch gekennzeichnet, dass** die Platte (2) an ihrem ersten Ende (A) eine Endseite (20) aufweist, die bezüglich der ersten Hauptseite (3) in einem spitzen Winkel geneigt ist, und dass die Lichtquelle (S) gegenüber dieser geneigten Endseite (20) gelegen ist.

12. Optische Vorrichtung zur Bildherstellung nach einem der Ansprüche 1 bis 10, **dadurch gekennzeichnet, dass** auf Höhe des eine Fläche zur Auflage eines Fingers (6) bildenden Teils (5) der ersten Hauptseite (3) der Platte (2) mindestens eine Seitenfläche (18) der Platte (2) in einem spitzen Winkel bezüglich der ersten Hauptseite (3) geneigt ist und dass die Lichtquelle (S) gegenüber dieser geneigten Seitenfläche (18) gelegen ist.

13. Optische Vorrichtung zur Bildherstellung nach Anspruch 12, **dadurch gekennzeichnet, dass** die beiden entgegengesetzten Seitenflächen (18) der Platte (2) geneigt sind und dass zwei Lichtquellen (S) jeweilig gegenüber diesen beiden geneigten Seitenflächen gelegen sind.

14. Optische Vorrichtung zur Bildherstellung nach einem der Ansprüche 11 bis 13, **dadurch gekennzeichnet, dass** die mindestens eine geneigte Seitenfläche (18) der Platte (2), die auf deren erstes Ende (A) zu gelegen ist, in der Richtung der Dicke der Platte (2) gekrümmt ist, wobei die Konkavität nach außen gewandt ist.

15. Optische Vorrichtung zur Bildherstellung nach einem der Ansprüche 1 bis 10, **dadurch gekennzeichnet, dass** die Lichtquelle (S) nicht punktförmig mit einer signifikanten Oberfläche ist und vor der unteren Hauptseite (4) der Platte (2) im Wesentlichen gegenüber dem auf der oberen Hauptseite (3) vorgesehenen Teil (5) zur Auflage eines Fingers angeordnet ist und auf diesen zu gerichtet ist.

16. Optische Vorrichtung zur Bildherstellung nach Anspruch 15, **dadurch gekennzeichnet, dass** die Lichtquelle (S) eine Matrix (20) von Elektrolumineszenzdioden ist, wobei zwischen diese und die Unterseite (4) der Platte (2) eine Mattscheibe eingesetzt ist.
